# EUROPÄISCHE PATENTSCHRIFT

(11) **EP 1 495 219 B1**
(45) Veröffentlichungstag und Bekanntmachung des Hinweises auf die Patenterteilung: **15.02.2006**
(21) Anmeldenummer: 03746226.4
(22) Anmeldetag: 09.04.2003
(51) Int. Cl.: F02D 41/00, F02M 37/00

(54) **VORRICHTUNG ZUR ERMITTLUNG DER KRAFTSTOFFQUALITÄT UND ZUGEHÖRIGES VERFAHREN**
DEVICE FOR DETERMINING FUEL QUALITY AND CORRESPONDING METHOD
DISPOSITIF POUR DETERMINER LA QUALITE D'UN CARBURANT ET PROCEDE CORRESPONDANT

(30) Priorität: 18.04.2002 DE 10217379
(43) Veröffentlichungstag der Anmeldung: 12.01.2005
(73) Patentinhaber: SIEMENS AKTIENGESELLSCHAFT, 80333 München (DE)
(72) Erfinder: WIESE, Matthias, 60385 Frankfurt am Main (DE); ZHANG, Hong, 93105 Tegernheim (DE)
(86) Internationale Anmeldenummer: PCT/DE2003/001168
(87) Internationale Veröffentlichungsnummer: WO 2003/087560

(56) Entgegenhaltungen:
- DE-A- 10 014 550
- US-A- 6 109 225
- US-B1- 6 314 944
- PATENT ABSTRACTS OF JAPAN vol. 1997, no. 07, 31. Juli 1997 (1997-07-31) & JP 09 072252 A (UNISIA JECS CORP), 18. März 1997 (1997-03-18)

## Beschreibung

Die Erfindung betrifft eine Vorrichtung zur Ermittlung der Qualität von Kraftstoff für eine Brennkraftmaschine gemäß Anspruch 1 sowie ein entsprechendes Betriebsverfahren gemäß Anspruch 6.

Die Qualität des zum Betrieb von Brennkraftmaschinen verwendeten Kraftstoffs kann herstellungsbedingten Schwankungen unterliegen, was sich beispielsweise in einem unterschiedlichen Anteil langkettiger Kohlenwasserstoffe äußern kann.

Es ist deshalb bekannt, die Qualität des verwendeten Kraftstoffs zu ermitteln und bei der Kraftstoffeinspritzung zu berücksichtigen, um Qualitätsschwankungen weitestgehend auszugleichen.

Zur Zeit werden Kraftstoffqualitätsänderungen mit Hilfe einer sogenannten Startmengenadaption oder der Laufunruhe-Methode erkannt und durch Änderung der.Einspritzzeitdauern kompensiert. Bei diesen bekannten Verfahren wird der Drehzahlanstieg beim Starten der Brennkraftmaschine bzw. die Drehzahlschwankungen beim Starten ausgewertet. Liegt der Drehzahlanstieg bzw. liegen die Drehzahlschwankungen nicht innerhalb eines erlaubten, vorgegebenen Vertrauensbandes, so wird die Einspritzzeitdauer entsprechend korrigiert. Der Betrag der Korrektur wird aber relativ ungenau berechnet, so dass unter Umständen die Korrektur zu stark ausfällt. Insbesondere wird bei einem sogenannten "schlechten Start" die Einspritzzeitdauer derart verändert, dass das Kraftstoff-Luft-Gemisch fetter wird, weshalb das Kraftstoff-Luft-Gemisch nach einem Tankvorgang mit sehr gutem Treibstoff zu fett werden kann. Die Brennkraftmaschine springt dann nur noch schlecht oder gar nicht mehr an.

Nachteilig an diesem Verfahren zur Bestimmung der Kraftstoffqualität ist weiters die relativ geringe Genauigkeit, da der Drehzahlanstieg beim Starten der Brennkraftmaschine nicht nur von der Kraftstoffqualität abhängt, sondern auch von anderen Parametern beeinflusst wird, wie beispielsweise der inneren Reibung der Brennkraftmaschine.

In der DE 40 27 947 A1 sind verschiedene Verfahren beschrieben, wie man die Kraftstoffqualitätsänderungen berücksichtigen kann. Zum einen kann nach jedem Betanken des von der Brennkraftmaschine angetriebenen Fahrzeuges die Regelabweichung im Lambdaregelungskreis gemessen und ein Adaptionswert so verändert werden, dass die ermittelte Regelabweichung verschwindet. Dieses Verfahren hat den Nachteil, dass es nur dann funktioniert, wenn die Lambdaregelung aktiv ist, was aber insbesondere bei kalter Brennkraftmaschine nicht der Fall ist. Zum anderen sind Verfahren vorgeschlagen, die auch bei kalter Brennkraftmaschine selbst dann für eine Betriebsfähigkeit der Brennkraftmaschine sorgen, wenn sich die Kraftstoffzusammensetzung beim Betanken stark ändert, z. B. dadurch, dass ein Kraftstoff enthaltender Tank fast leer gefahren wurde und dann ein überwiegend Methanol enthaltender Kraftstoff getankt wurde. Mit Hilfe der Tankstände vor und nach dem Betanken und auf Grundlage der Daten zu käuflichen Kraftstoffen wird abgeschätzt, was für Kraftstoffzusammensetzungen vorliegen können. Die Vorsteuerwerte werden dann für den Betrieb der Brennkraftmaschine mit Kraftstoffen der möglichen Zusammensetzungen verändert und es wird untersucht, unter der Annahme bei welcher Zusammensetzung die Brennkraftmaschine am besten läuft. Mit diesen Werten wird dann die Brennkraftmaschine weiter geregelt.

Nachteilig an diesen bekannten Verfahren zur Bestimmung der Kraftstoffqualität ist jedoch, dass diese an den Verbrennungsprozess gekoppelt sind und deshalb auch durch andere Parameter beeinflusst werden können.

Die US 6 109 225 offenbart eine Vorrichtung zur Steuerung eines Ventils einer Brennkraftmaschine, wobei das Ventil in Abhängigkeit der Qualität eines der Brennkraftmaschine zugeführten Kraftstoffs angesteuert wird. Die Qualitätsbestimmung des Kraftstoffs wird in Abhängigkeit von der Kraftstofftemperatur und eines Kraftstoffbehälter-Innendrucks ermittelt.

Aus der US 6 314 944 B1 ist eine Kraftstoffversorgungs-Kontrolleinrichtung für Brennkraftmaschinen bekannt, wobei die der Brennkraftmaschine zugeführte Kraftstoffmenge in Abhängigkeit von der Eigenschaft des Kraftstoffs korrigiert wird. Die Eigenschaft des Kraftstoffs wird unter anderem dadurch bestimmt, dass aus der Änderung eines in einem den Kraftstoff enthaltenen Kraftstoffbehälter gemessenen Drucks auf das Ausgasungsverhalten des Kraftstoffs geschlossen wird, wobei die Messung nur unterhalb eines vorbestimmten Temperatur-Grenzwertes vorgenommen wird, um Fehlmessungen auszuschließen.

Die JP 09072252 ist auf eine Vorrichtung gerichtet, die dazu geeignet ist, Eigenschaften eines Kraftstoffs in einem Kraftstoffbehälter zu ermitteln. Hierbei wird vorgeschlagen, einen Drucksensor zu verwenden, um die Eigenschaften des Kraftstoffs in Abhängigkeit von der zeitlichen Veränderung des gemessenen Drucks zu bestimmen.

Aus der DE 100 14 550 A1 ist eine Steuerungsvorrichtung für eine Kraftstoffpumpe bekannt. Es wird vorgeschlagen, die Kraftstoffpumpe in Abhängigkeit von einem Sensorsignal eines in dem Kraftstofftank angeordneten Drucksensors zu steuern.

Der Erfindung liegt deshalb die Aufgabe zugrunde, eine vom Verbrennungsprozess unabhängige Vorrichtung bzw. ein entsprechendes Verfahren zur Ermittlung der Kraftstoffqualität anzugeben.

Die Aufgabe wird hinsichtlich der Vorrichtung durch die Merkmale des Anspruchs 1 und hinsichtlich eines entsprechenden Verfahrens durch die Merkmale des Anspruchs 3 gelöst. Die Erfindung geht von der technischen Erkenntnis aus, dass das Ausgasungsverhalten von Kraftstoff einen Rückschluss auf die Kraftstoffqualität zulässt. So gast Kraftstoff mit einem hohen Anteil langkettiger Kohlenwasserstoffe weniger stark aus als Kraftstoff mit einem hohen Anteil kurzkettiger Kohlenwasserstoffe, da langkettige Kohlenwasserstoffe weniger flüchtig sind. Das Ausgasungsverhalten des Kraftstoffs gibt also die Zusammensetzung des Kraftstoffs aus langkettigen und kurzkettigen Kohlenwasserstoffen und damit die Qualität des Kraftstoffs wieder.

Im Rahmen der Erfindung ist deshalb vorgesehen, Druck und Temperatur in einem Kraftstoffbehälter zu ermitteln, um daraus einen Qualitätswert abzuleiten, der die Kraftstoffqualität wiedergibt.

Die Ermittlung von Druck bzw. Temperatur in dem Kraftstoffbehälter erfolgt vorzugsweise durch einen separaten Drucksensor bzw. einen Temperatursensor. Es ist jedoch alternativ auch möglich, dass Druck bzw. Temperatur in dem Kraftstoffbehälter aus anderen Messwerten abgeleitet werden, so dass auf einen separaten Druck- bzw. Temperatursensor verzichtet werden kann. Der im Rahmen der Erfindung verwendete Begriff eines Druck- bzw. Temperatursensors ist deshalb allgemein zu verstehen und umfasst alle Anordnungen, bei denen der Druck bzw. die Temperatur in dem Kraftstoffbehälter direkt oder indirekt ermittelt wird. Beispielsweise kann der Temperatursensor auch die Kraftstofftemperatur im Niederdruckbereich der Einspritzanlage messen, um daraus die Kraftstofftemperatur in dem Kraftstoffbehälter abzuleiten.

Weiterhin weist die erfindungsgemäße Vorrichtung eine Auswertungseinheit auf, die eingangsseitig mit dem Temperatursensor und dem Drucksensor verbunden ist und in Abhängigkeit von dem Druck und der Temperatur in dem Kraftstoffbehälter den Qualitätswert bestimmt.

Erfindungsgemäß weist die Auswertungseinheit zwei Recheneinheiten auf, wobei die erste Recheneinheit mit dem Drucksensor und dem Temperatursensor verbunden ist und in Abhängigkeit von Druck und Temperatur in dem Kraftstoffbehälter einen Ausgasungskennwert ermittelt, der das Ausgasungsverhalten des Kraftstoffs wiedergibt.

Die zweite Recheneinheit bestimmt dann aus dem Ausgasungskennwert den Qualitätswert des Kraftstoffs, wobei die Zuordnung von Ausgasungskennwert und Qualitätswert vorzugsweise als funktionaler Zusammenhang vorliegt. Bei der zweiten Recheneinheit kann es sich jedoch auch um ein Kennlinienglied handeln, in dem dieser funktionaler Zusammenhang in Form einer Tabelle abgespeichert ist.

Erfindungsgemäß weist die Auswertungseinheit einen Differenzierer auf, der die zeitliche Drückänderung in dem Kraftstoffbehälter ermittelt. Der Begriff eines Differenzierers ist jedoch im Rahmen der Erfindung allgemein zu verstehen und umfasst neben Differenzierern im engen mathematischen Sinne auch Bauelemente oder Baugruppen, welche die zeitliche Änderung des Drucks ermitteln.

In der Erfindung ist weiterhin eine Vergleichereinheit vorgesehen, welche die zeitliche Änderung des Drucks in dem Kraftstoffbehälter mit einem vorgegebenen Grenzwert vergleicht. Hierbei wird von der Erkenntnis ausgegangen, dass das Ausgasungsverhalten des Kraftstoffs stark temperaturabhängig ist und bei einer bestimmten Grenztemperatur eine sprunghafte Änderung zeigt. Beim Überschreiten der Grenztemperatur nimmt die Kraftstoffausgasung nämlich sprunghaft zu, was bei einer Erwärmung des Kraftstoffs entsprechend zu einem sprunghaften Druckanstieg in dem Kraftstoffbehälter führt. Umgekehrt nimmt der Druck in dem Kraftstoffbehälter beim Abkühlen sprunghaft ab, wenn die Grenztemperatur unterschritten wird. Der vorgegebene Grenzwert für die Druckänderung entspricht deshalb vorzugsweise der Druckänderung bei der vorgegebenen Grenztemperatur, um die Grenztemperatur als Ausgasungskennwert ermitteln zu können.

Schließlich ist in der bevorzugten Ausführungsform der Erfindung ein Abtast-Halteglied vorgesehen, das von der Vergleichereinheit angesteuert wird und die aktuell gemessene Temperatur in dem Kraftstoffbehälter zwischenspeichert, wenn die aktuelle Druckänderung in dem Kraftstoffbehälter den vorgegebenen Grenzwert überschreitet. Auf diese Weise enthält das Abtast-Halteglied stets die Grenztemperatur, bei welcher der Kraftstoff sein Ausgasungsverhalten sprunghaft ändert.

Das erfindungsgemäße Verfahren zur Bestimmung der Kraftstoffqualität kann auch als Computerprogramm realisiert werden, indem beispielsweise das Steuerprogramm in der elektronischen Steuereinheit einer Einspritzanlage entsprechend modifiziert wird. Entsprechend kann die erfindungsgemäße Vorrichtung vollständig in die elektronische Steuereinheit einer Einspritzanlage integriert werden.

Es ist jedoch auch möglich, die erfindungsgemäße Vorrichtung als separate Baugruppe auszubilden, die dann über Datenleitungen mit der elektronischen Steuereinheit der Einspritzanlage verbunden werden kann.

Weiterhin ist zu erwähnen, dass das erfindungsgemäße Verfahren sowohl nach dem Abschalten der Brennkraftmaschine bei abkühlendem Kraftstoff als auch bei laufender Brennkraftmaschine und aufheizendem Kraftstoff durchgeführt werden kann. Entscheidend ist lediglich, dass sich das Ausgasungsverhalten des Kraftstoffs in dem Kraftstoffbehälter temperaturbedingt ändert, was einen Rückschluss auf die Kraftstoffzusammensetzung zulässt.

Vorteilhaft an der erfindungsgemäßen Vorrichtung bzw. dem zugehörigen Verfahren ist der relativ geringe Aufwand, da herkömmliche Einspritzanlage meist ohnehin einen Temperatursensor zur Messung der Kraftstofftemperatur aufweisen.

Andere vorteilhafte Weiterbildungen der Erfindung sind in den Unteransprüche gekennzeichnet oder werden nachstehend zusammen mit der Beschreibung des bevorzugten Ausführungsbeispiels der Erfindung anhand der Zeichnungen näher erläutert. Es zeigen:
- Figur 1: eine erfindungsgemäße Vorrichtung zur Bestimmung der Kraftstoffqualität,
- Figur 2: das Betriebsverfahren der Vorrichtung aus Figur 1 als Flußdiagramm sowie
- Figur 3a und 3b: eine Abkühl- und Aufwärmkennlinie des Kraftstoffs.

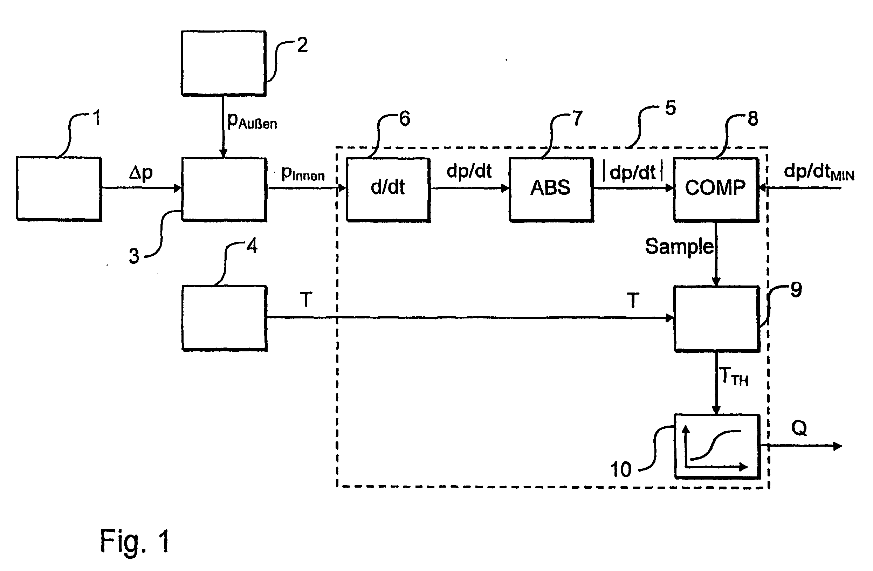

Die in Figur 1 dargestellte erfindungsgemäße Vorrichtung dient zur Bestimmung der Qualität des in einem Kraftstoffbehälter einer Brennkraftmaschine befindlichen Kraftstoffs und ermöglicht eine Berücksichtigung der ermittelten Kraftstoffqualität beim Betrieb der Brennkraftmaschine, indem beispielsweise eine Einspritzanlage entsprechend gesteuert wird.

Die erfindungsgemäße Bestimmung der Kraftstoffqualität beruht auf der Erkenntnis, dass das Ausgasungsverhalten des Kraftstoffs von der Kraftstoffqualität abhängt, da langkettige Kohlenwasserstoffe weniger stark ausgasen als kurzkettige Kohlenwasserstoffe. Bei einer normgemäßen Zusammensetzung des Kraftstoffs mit einem vorgegebenen Anteil langkettiger und kurzkettiger Kohlenwasserstoffe weist der Kraftstoff also ein vorgegebenes Ausgasungsverhalten auf, während Normabweichungen der Kraftstoffzusammensetzung mit einem veränderten Ausgasungsverhalten verbunden sind.

Das Ausgasungsverhalten des Kraftstoffs wird hierbei anhand des in dem Kraftstoffbehälter befindlichen Kraftstoffs ermittelt, wobei der Kraftstoffbehälter während der Messung abgedichtet wird, damit die Ausgasungen von Kraftstoff zu einer messbaren Druckänderung führen.

Die erfindungsgemäße Vorrichtung weist deshalb einen Drucksensor 1 auf, der in der Wandung des Kraftstoffbehälters angeordnet ist und den Differenzdruck Δp zwischen dem Innendruck p_{Innen} in dem Kraftstoffbehälter und dem Umgebungsdruck p_{Außen} misst.

Darüber hinaus ist ein weiterer Drucksensor 2 vorgesehen, der den Umgebungsdruck p_{Außen} misst, um höhen- oder wetterbedingte Schwankungen des Umgebungsdrucks p_{Außen} berücksichtigen zu können. Bei dem Drucksensor 2 kann es sich um einen herkömmlichen Sensor im engeren Sinne handeln. Es ist jedoch auch möglich, dass der Umgebungsdruck p_{Außen} aus anderen Messwerten abgeleitet wird.

Ausgangsseitig sind die beiden Drucksensoren 1, 2 mit einer Recheneinheit 3 verbunden, die aus dem Differenzdruck Δp und dem Umgebungsdruck p_{Außen} den Innendruck p_{Innen} in dem Kraftstoffbehälter berechnet.

Das Ausgasungsverhalten des Kraftstoffs wird jedoch nicht nur durch die Zusammensetzung des Kraftstoffs aus langkettigen und kurzkettigen Kohlenwasserstoffen bestimmt, sondern auch durch die Kraftstofftemperatur, da mit zunehmender Kraftstofftemperatur mehr Kraftstoff ausgast, was zu einer entsprechenden Druckerhöhung führt.

Die erfindungsgemäße Vorrichtung weist deshalb zusätzlich einen Temperatursensor 4 auf, der ebenfalls in der Wandung des Kraftstoffbehälters angeordnet ist und die Kraftstofftemperatur misst.

Ausgangsseitig sind die Recheneinheit 3 und der Temperatursensor 4 mit einer Auswertungseinheit 5 verbunden, die aus den Messwerten für Druck p und Temperatur T einen Qualitätswert Q bestimmt, der die Kraftstoffqualität wiedergibt.

Hierzu weist die Auswertungseinheit 5 eine Recheneinheit 6 auf, welche die zeitliche Änderung dp/dt der von dem Drucksensor 1 gemessenen Druckdifferenz p bestimmt.

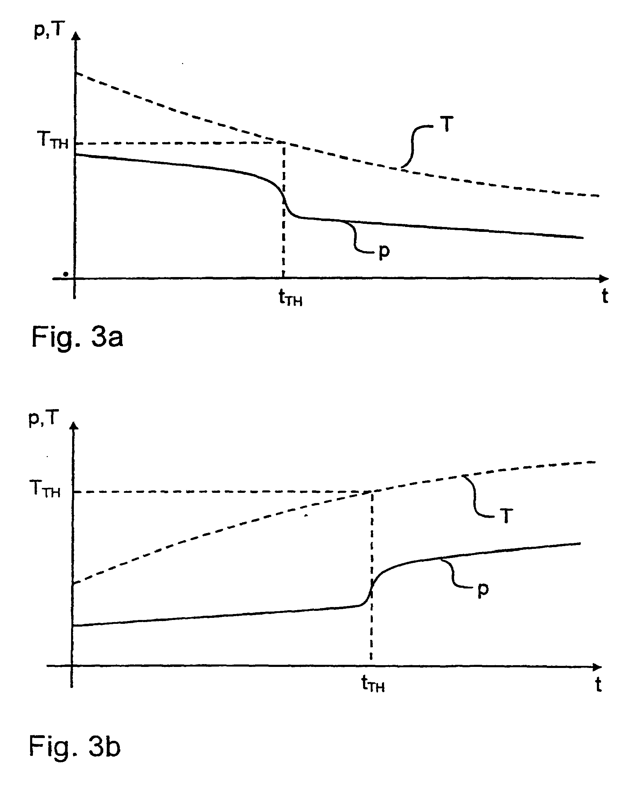

Die Recheneinheit 6 ist ausgangsseitig mit einer weiteren Recheneinheit 7 verbunden, die den Absolutwert der zeitlichen Druckänderung bestimmt. Dies ist erforderlich, da die zeitliche Druckänderung dp/dt beim Abkühlen des Kraftstoffs nach einem Abschalten der Brennkraftmaschine negativ ist, wie in Figur 3a dargestellt wird. Im Gegensatz dazu ist die zeitliche Druckänderung dp/dt bei einer Messung nach dem Einschalten der Brennkraftmaschine positiv, wie in Figur 3b dargestellt wird.

Ausgangsseitig ist die Recheneinheit 7 mit einer Vergleichereinheit 8 verbunden, welche den Absolutwert der zeitlichen Druckänderung dp/dt mit einem vorgegebenen Grenzwert dp/dt_{MIN} vergleicht.

Hierbei wird die Erkenntnis ausgenutzt, dass das Ausgasungsverhalten des Kraftstoffs stark temperaturabhängig ist, was bei einer bestimmten Grenztemperatur T_{TH} zu einer sprunghaften Druckänderung führt, wie aus Figur 3a und 3b ersichtlich ist. Der vorgegebene Grenzwert dp/dt_{MIN} entspricht hierbei im wesentlichen der zeitlichen Druckänderung bei der Grenztemperatur T_{TH}, so dass die Vergleichereinheit 8 die Bestimmung der Grenztemperatur T_{TH} ermöglicht.

Die Grenztemperatur T_{TH} ist jedoch nicht konstant, sondern hängt von der Kraftstoffzusammensetzung ab und gibt das Ausgasungsverhalten des Kraftstoffs wieder. Ein niedriger Grenzwert T_{TH} ist ein Anzeichen für einen stark flüchtigen Kraftstoff mit einem hohen Anteil kurzkettiger Kohlenwasserstoffe. Ein hoher Grenzwert T_{TH} resultiert dagegen aus einem hohen Anteil von langkettigen Kohlenwasserstoffen, so dass der Kraftstoff wenig flüchtig ist. Der Grenzwert T_{TH} ist also ein Ausgasungskennwert, der das Ausgasungsverhalten des Kraftstoffs wiedergibt.

In Abhängigkeit von dem Vergleichsergebnis steuert die Vergleichereinheit 8 ein Abtast-Halteglied 9 an, das eingangsseitig mit dem Temperatursensor 4 verbunden ist. Falls die zeitliche Druckänderung dp/dt den vorgegebenen Grenzwert dp/dt_{MIN} überschreitet, so übernimmt das Abtast-Halteglied 9 die aktuell gemessene Temperatur T als Grenztemperatur T_{TH} und speichert diese ab. Andernfalls behält das Abtast-Halteglied 9 dagegen den zuvor.ermittelten Wert für die Grenztemperatur T_{TH}.

Schließlich ist das Abtast-Halteglied 9 mit einer Recheneinheit 10 verbunden, die aus dem gespeicherten Ausgasungskennwert T_{TH} den Qualitätswert Q berechnet, der die Kraftstoffqualität wiedergibt. Die Berechnung des Qualitätswerts erfolgt entsprechend einem vorgegebenen funktionalen Zusammenhang, der in der Recheneinheit 10 in Form einer Tabelle gespeichert ist.

Der von der erfindungsgemäßen Vorrichtung ermittelte Qualitätswert Q kann dann von einer Einspritzanlage für eine Brennkraftmaschine berücksichtigt werden, um die Auswirkungen einer schwankenden Kraftstoffqualität auszugleichen.

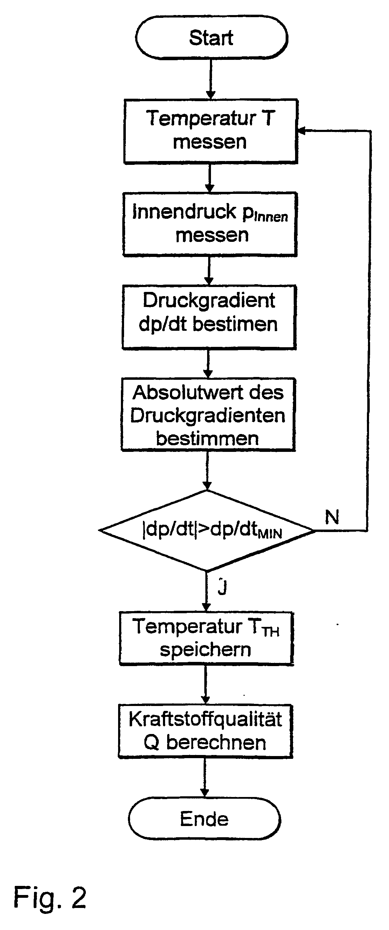

Im folgenden wird nun unter Bezugnahme auf das in Figur 2 dargestellte Flussdiagramm das erfindungsgemäße Verfahren beschrieben.

Nach dem Start werden in einer Schleife laufend die Temperatur T und der Innendruck p_{Innen} in dem Kraftstoffbehälter der Brennkraftmaschine gemessen.

Dabei wird laufend der Druckgradient dp/dt berechnet und der Absolutwert des Druckgradienten ermittelt.

Der Absolutwert des Druckgradienten wird dann laufend mit dem vorgegebenen Grenzwert dp/dt_{MIN} verglichen, wobei es sich um die zeitliche Druckänderung handelt, die während der sprunghaften Änderung des Ausgasungsverhaltens des Kraftstoffs bei der Grenztemperatur T_{TH} auftritt, was in den Figuren 3a und 3b dem Zeitpunkt t_{TH} entspricht.

Falls der Druckgradient dp/dt den vorgegebenen Grenzwert dp/dt_{MIN} überschreitet, so wird die aktuelle Temperatur T als Grenztemperatur T_{TH} gespeichert. Andernfalls wird die Schleife erneut durchlaufen, bis der aktuelle Druckgradient dp/dt den Grenzwert dp/dt_{MIN} überschreitet.

In einem letzten Schritt wird dann aus der gespeicherten Grenztemperatur T_{TH} entsprechend einem vorgegebenen funktionalen Zusammenhang der Qualitätswert Q berechnet, der die Kraftstoffqualität wiedergibt. Dieser Qualitätswert Q kann dann anschließend von der Einspritzanlage berücksichtigt werden, um den Einfluss einer schwankenden Kraftstoffqualität auszugleichen.

Das vorstehend beschriebene erfindungsgemäße Verfahren funktioniert sowohl beim Abkühlen des Kraftstoffs nach einem Abschalten der Brennkraftmaschine als auch bei laufendem Motor, wenn sich der Kraftstoff langsam erwärmt.

Figur 3a zeigt den Verlauf der Temperatur T und des Drucks p in dem Kraftstoffbehälter beim Abkühlen des Kraftstoffs nach dem Abschalten des Brennkraftmaschine, wenn die Temperatur T exponentiell abklingt. Der Druck p nimmt dabei zwar ebenfalls ab, jedoch zeigt der Druckverlauf zum Zeitpunkt t_{TH} eine sprunghafte Verringerung, wenn die Grenztemperatur T_{TH} unterschritten wird. Dies liegt daran, dass das Ausgasungsverhalten des Kraftstoffs stark temperaturabhängig ist und bei der Grenztemperatur T_{TH} einbricht. Die Grenztemperatur T_{TH} bildet also einen Ausgasungskennwert, der das Ausgasungsverhalten des Kraftstoffs wiedergibt.

Figur 3b zeigt dagegen den Verlauf der Temperatur T und des Drucks p in dem Kraftstoffbehälter nach dem Starten der Brennkraftmaschine, wenn die Kraftstofftemperatur T exponentiell zunimmt. Der Druck p in dem Kraftstoffbehälter nimmt hierbei ebenfalls zu und zeigt beim Überschreiten der Grenztemperatur T_{TH} einen sprunghaften Anstieg. Dies liegt daran, dass das Ausgasungsverhalten des Kraftstoffs beim Überschreiten der Grenztemperatur T_{TH} sprunghaft ansteigt, so dass die Grenztemperatur T_{TH} einen temperaturunabhängigen Ausgasungskennwert bildet, der das Ausgasungsverhalten des Kraftstoffs wiedergibt.

## Patentansprüche

1. Vorrichtung zur Ermittlung der Qualität von Kraftstoff für eine Brennkraftmaschine, mit
a) einem Drucksensor (1) zur Ermittlung des Drucks (p) in einem Kraftstoffbehälter,
b) einem Temperatursensor (4) zur Ermittlung der Temperatur (T) in einem Kraftstoffbehälter,
c) einer eingangsseitig mit dem Drucksensor (1) und dem Temperatursensor (4) verbundenen Auswertungseinheit (5) zur Ermittlung eines die Qualität des Kraftstoffs wiedergebenden Qualitätswerts (Q) in Abhängigkeit von der Temperatur (T) und dem Druck (p) in dem Kraftstoffbehälter,
d) wobei die Auswertungseinheit (5) eine erste Recheneinheit (6-9) aufweist, die eingangsseitig mit dem Drucksensor (1) und dem Temperatursensor (4) verbunden ist und in Abhängigkeit von dem Druck (p) und der Temperatur (T) in dem Kraftstoffbehälter einen das Ausgasungsverhalten des Kraftstoffs wiedergebenden Ausgasungskennwert (T_{TH}) ermittelt,
e) wobei die Auswertungseinheit (5) eine zweite Recheneinheit (10) aufweist, die eingangsseitig mit der ersten Recheneinheit (6-9) verbunden ist und in Abhängigkeit von dem Ausgasungskennwert (T_{TH}) den Qualitätswert (Q) des Kraftstoffs bestimmt,
f) wobei die erste Recheneinheit (6-9) einen Differenzierer (6) aufweist, der die zeitliche Änderung des Drucks (p) in dem Kraftstoffbehälter ermittelt, und
g) wobei die erste Recheneinheit (6-9) eine Vergleichereinheit (8) aufweist, die eingangsseitig mit dem Differenzierer (6) verbunden ist und die zeitliche Druckänderung in dem Kraftstoffbehälter mit einem vorgegebenen Grenzwert vergleicht,
**dadurch gekennzeichnet,**
**dass** der Ausgasungskennwert (T_{TH}) die Temperatur in dem Kraftstoffbehälter beim Erreichen oder Überschreiten des vorgegebenen Grenzwerts für die Druckänderung ist, wobei der vorgegebene Grenzwert (dp/dt_{MIN}) einer sprunghaften Änderung des Ausgasungsverhaltens des Kraftstoffs bei dieser Temperatur entspricht.

2. Vorrichtung nach Anspruch 1,
**dadurch gekennzeichnet,**
**dass** die Auswertungseinheit (5) ein Abtast-Halteglied (9) mit einem Abtasteingang und einem Steuereingang aufweist, wobei der Abtasteingang mit dem Temperatursensor (4) verbunden ist, während der Steuereingang mit der Vergleichereinheit (8) verbunden ist.

3. Verfahren zur Bestimmung der Qualität von Kraftstoff für eine Brennkraftmaschine, mit den folgenden Schritten:
a) Ermittlung von Druck (p) und Temperatur (T) in einem Kraftstoffbehälter, während sich der Kraftstoff in dem Kraftstoffbehälter befindet,
b) Ermittlung der zeitlichen Druckänderung (dp/dt) in dem Kraftstoffbehälter,
c) Bestimmung eines das Ausgasungsverhalten des Kraftstoffs wiedergebenden Ausgasungskennwerts (T_{TH}) in Abhängigkeit von der zeitlichen Druckänderung (dp/dt) und der Temperatur (T) in dem Kraftstoffbehälter,
d) Bestimmung eines die Qualität des Kraftstoff wiedergebenden Qualitätswerts (Q) in Abhängigkeit von dem ermittelten Ausgasungskennwert (T_{TH}) des Kraftstoffs und
e) Vergleich der zeitlichen Druckänderung (dp/dt) in dem Kraftstoffbehälter mit einem vorgegebenen Grenzwert (dp/dt_{MIN}),
**gekennzeichnet durch**
f) Bestimmung des Ausgasungskennwerts (T_{TH}) als die Temperatur in dem Kraftstoffbehälter beim Erreichen oder Überschreiten des vorgegebenen Grenzwerts (dp/dt_{MIN}) für die Druckänderung, wobei der vorgegebene Grenzwert (dp/dt_{MIN}) einer sprunghaften Änderung des Ausgasungsverhaltens des Kraftstoffs bei dieser Temperatur entspricht.

4. Verfahren nach Anspruch 3,
**dadurch gekennzeichnet,**
**dass** der Kraftstoffbehälter während der Ermittlung des Drucks und der Temperatur abgedichtet wird.

5. Verfahren nach Anspruch 4,
**dadurch gekennzeichnet,**
**dass** der Kraftstoffbehälter eine Tankentlüftung aufweist, die während der Ermittlung des Drucks (p) in dem Kraftstoffbehälter abgeschaltet wird.

6. Verfahren nach mindestens einem der Ansprüche 3 bis 5,
**dadurch gekennzeichnet,**
**dass** die Brennkraftmaschine während der Ermittlung des Drucks (p) in dem Kraftstoffbehälter abgeschaltet wird.

7. Verfahren nach mindestens einem der Ansprüche 3 bis 6,
**dadurch gekennzeichnet,**
**dass** in Abhängigkeit von dem Qualitätswert Kraftstoff in einen Brennraum einer Brennkraftmaschine eingespritzt wird.

## Claims

1. Device for determining the quality of fuel for an internal combustion engine, having
a) a pressure sensor (1) for measuring the pressure (p) in a fuel tank,
b) a temperature sensor (4) for measuring the temperature (T) in a fuel tank,
c) an evaluation unit (5) with inputs connected to the pressure sensor (1) and the temperature sensor (4) for determining a quality value (Q) representing the quality of the fuel as a function of the temperature (T) and the pressure (p) in the fuel tank,
d) wherein the evaluation unit (5) comprises a first processing unit (6-9) which has inputs connected to the pressure sensor (1) and the temperature sensor (4) and which determines, as a function of the pressure (p) and temperature (T) in the fuel tank, a gas emission characteristic value (T_{TH}) representing the gas emission behaviour of the fuel,
e) wherein the evaluation unit (5) comprises a second processing unit (10) which has an input connected to the first processing unit (6-9) and which determines the quality value (Q) of the fuel as a function of the gas emission characteristic value (T_{TH}),
f) wherein the first processing unit (6-9) comprises a differentiator (6) which determines the rate of change in the pressure (p) in the fuel tank, and
g) wherein the first processing unit (6-9) comprises a comparator unit (8) which has inputs connected to the differentiator (6) and which compares the rate of change in pressure in the fuel tank with a predetermined threshold value.
**characterised in that**
the gas emission characteristic value (T_{TH}) is the temperature in the fuel tank at which the predetermined threshold value for the change in pressure is reached or exceeded, wherein the predetermined threshold value (dp/dt_{MIN}) corresponds to an abrupt change in the gas emission behaviour of the fuel at said temperature.

2. Device according to claim 1,
**characterised in that**
the evaluation unit (5) has a sample-and-hold circuit (9) having a sampling input and a control input, the sampling input being connected to the temperature sensor (4) while the control input is connected to the comparator unit (8).

3. Method for determining the quality of fuel for an internal combustion engine, comprising the following steps:
a) measuring pressure (p) and temperature (T) in a fuel tank while the fuel is in the fuel tank,
b) determining the rate of change in pressure (dp/dt) in the fuel tank,
c) determining a gas emission characteristic value (T_{TH}) representing the gas emission behaviour of the fuel as a function of the rate of change in pressure (dp/dt) and the temperature (T) in the fuel tank,
d) determining a quality value (Q) representing the quality of the fuel as a function of the gas emission characteristic value (T_{TH}) determined for the fuel, and
e) comparing the rate of change in pressure (dp/dt) in the fuel tank with a predetermined threshold value (dp/dt_{MIN}),
**characterised by**
f) determining the gas emission characteristic value (T_{TH}) as the temperature in the fuel tank at which the predetermined threshold value (dp/dt_{MIN}) for the change in pressure is reached or exceeded, the predetermined threshold value (dp/dt_{MIN}) corresponding to an abrupt change in the gas emission behaviour of the fuel at said temperature.

4. Method according to claim 3,
**characterised in that**
the fuel tank is sealed off during the measurement of the pressure and the temperature.

5. Method according to claim 4,
**characterised in that**
the fuel tank has a tank ventilation means that is shut off during measurement of the pressure (p) in the fuel tank.

6. Method according to at least one of the claims 3 to 5,
**characterised in that**
the internal combustion engine is switched off during measurement of the pressure (p) in the fuel tank.

7. Method according to at least one of the claims 3 to 6,
**characterised in that**
fuel is injected into a combustion chamber of an internal combustion engine as a function of the quality value.

## Revendications

1. Dispositif pour déterminer la qualité d'un carburant pour un moteur à combustion interne, comprenant
a) un capteur de pression (1) pour déterminer la pression (p) dans un réservoir à carburant,
b) un capteur de température (4) pour déterminer la température (T) dans un réservoir à carburant,
c) une unité d'évaluation (5) reliée côté entrée au capteur de pression (1) et au capteur de température (4), pour déterminer une valeur qualitative (Q) reflétant la qualité du carburant, en fonction de la température (T) et de la pression (p) dans le réservoir à carburant,
d) l'unité d'évaluation (5) comportant une première unité de calcul (6 à 9), qui côté entrée est reliée au capteur de pression (1) et au capteur de température (4) et qui en fonction de la pression (p) et de la température (T) dans le réservoir à carburant détermine une valeur caractéristique pour le dégagement gazeux (T_{TH}) qui reflète le comportement du carburant au dégagement gazeux,
e) l'unité d'évaluation (5) comportant une deuxième unité de calcul (10), qui côté entrée est reliée à la première unité de calcul (6 à 9) et qui en fonction de la valeur caractéristique pour le dégagement gazeux (T_{TH}) détermine la valeur qualitative (Q) du carburant,
f) la première unité de calcul (6 à 9) comportant un différenciateur (6), qui détermine la modification dans le temps de la pression (p) dans le réservoir à carburant, et
g) la première unité de calcul (6 à 9) comportant un comparateur (8), qui côté entrée est relié au différenciateur (6) qui compare la modification dans le temps de la pression dans le réservoir à carburant avec une valeur limite prédéfinie,
**caractérisé en ce que**
la valeur caractéristique pour le dégagement gazeux (T_{TH}) est la température dans le réservoir à carburant à l'atteinte ou lors du dépassement de la valeur limite prédéfinie pour la modification de la pression, la valeur limite prédéfinie (dp/dt_{MIN}) correspondant à une brusque modification du comportement du carburant au dégagement gazeux à cette température.

2. Dispositif selon la revendication 1,
**caractérisé en ce que**
l'unité d'évaluation (5) comporte un échantillonneur/bloqueur (9) avec une entrée d'échantillonnage et une entrée de contrôle, l'entrée d'échantillonnage étant reliée au capteur de température (4), alors que l'entrée de contrôle est reliée au comparateur (8).

3. Procédé pour déterminer la qualité de carburant pour un moteur à combustion interne, comprenant les étapes suivantes :
a) détermination de la pression (p) et de la température (T) dans un réservoir à carburant, pendant que le carburant se trouve dans le réservoir,
b) détermination de la modification dans le temps de la pression (dp/dt) dans le réservoir à carburant,
c) détermination d'une valeur caractéristique pour le dégagement gazeux (T_{TH}) reflétant le comportement du carburant au dégagement gazeux, en fonction de la modification dans le temps de la pression (dp/dt) et de la température (T) dans le réservoir à carburant,
d) détermination d'une valeur qualitative (Q) reflétant la qualité du carburant, en fonction de la valeur caractéristique déterminée pour le dégagement gazeux (T_{TH}) du carburant et
e) comparaison de la modification dans le temps de la pression (dp/dt) dans le réservoir à carburant avec une valeur limite prédéfinie (dp/dt_{MIN}),
**caractérisé par**
f) une détermination de la valeur caractéristique pour le dégagement gazeux (T_{TH}) en tant que la température dans le réservoir à carburant à l'atteinte ou lors du dépassement de la valeur limite prédéfinie (dp/dt_{MIN}) pour la modification de pression, la valeur limite prédéfinie (dp/dt_{MIN}) correspondant à une brusque modification du comportement du carburant au dégagement gazeux à cette température.

4. Procédé selon la revendication 3,
**caractérisé en ce que**
le réservoir à carburant est étanchéifié pendant la détermination de la pression et de la température.

5. Procédé selon la revendication 4,
**caractérisé en ce que**
le réservoir à carburant comporte un dégazage du réservoir qui est mis hors service pendant la détermination de la pression (p) dans le réservoir à carburant.

6. Procédé selon au moins l'une des revendications 3 à 5,
**caractérisé en ce que** le moteur à combustion interne est mis à l'arrêt pendant la détermination de la pression (p) dans le réservoir à carburant.

7. Procédé selon au moins l'une des revendications 3 à 6,
**caractérisé en ce que** l'injection dans une chambre de combustion d'un moteur à combustion interne est assurée en fonction de la valeur qualitative du carburant.
